# EUROPEAN PATENT SPECIFICATION

(11) **EP 2 638 110 B1**
(45) Date of publication and mention of the grant of the patent: **12.06.2019**
(21) Application number: 11839145.7
(22) Date of filing: 10.11.2011
(51) Int. Cl.: C08L 77/00, C08K 5/5313, C08K 3/22, C08K 5/053, C09K 21/12

(54) **HALOGEN-FREE FLAME RETARDANT POLYAMIDE COMPOSITION**
HALOGENFREIE UND FEUERFESTE POLYAMIDZUSAMMENSETZUNG
COMPOSITION IGNIFUGE DE POLYAMIDE SANS HALOGÈNE

(30) Priority: 10.11.2010 CN 201010544353
(43) Date of publication of application: 18.09.2013
(73) Proprietor: E. I. du Pont de Nemours and Company, Wilmington, DE 19805 (US)
(72) Inventor: YU, Ting, Shanghai 201203 (CN)
(74) Representative: Dannenberger, Oliver Andre
(86) International application number: PCT/US2011/060202
(87) International publication number: WO 2012/064965

(56) References cited:
- EP-A2- 1 041 109
- WO-A1-2010/014785
- WO-A2-2005/121234
- US-A1- 2005 014 875
- US-A1- 2005 119 379
- US-A1- 2005 119 379
- US-A1- 2006 089 435
- US-A1- 2010 113 656

## Description

### Field of Disclosure

The disclosure is related to a halogen-free flame retardant polyamide composition with improved thermal stability.

### Background

Polyamides possess desirable chemical resistance and processability, which make polyamides particularly well suited for electrical/electronic applications. One other critical property that is required for those polyamides used in electrical/electronic applications is flame retardance. Various flame retardant systems have been developed and used in polyamides. Due to toxicity concerns of halogenated flame retardants, halogen-free flame retardants are gaining more and more attention these days. And among them, phosphorus compounds (such as salts of phosphinic or diphosphinic acids, see e.g., European Patent Application No. EP 0792912 and U.S. Patent Publication No. 2007/0072970) are used the most due to the stability and flame retardant effectiveness thereof. Prior art has also demonstrated that various types of compounds can be used as synergists in combination with the phosphorus compounds to further maximize the flame retardant effectiveness thereof. For example, U.S. Patent No. 6,547,992 discloses the use of synthetic inorganic compounds such as oxygen compounds of silicon, magnesium compounds, metal carbonates of metals of the second main group of the periodic table, red phosphorus, zinc compounds, or aluminum compounds as flame retardant synergists; U.S. Patent No. 6,365,071 discloses the use of nitrogen-containing compounds (e.g., melamine cyanurate, melamine phosphate, melamine pyrophosphate, or melamine diborate) as flame retardant synergists; U.S. Patent No. 6,255,371 discloses the use of reaction products of phosphoric acids with melamine or condensed product of melamine (e.g., melamine polyphosphate (MPP)) as flame retardant synergists; and U.S. Patent No. 7,294,661 discloses the use of silicon oxides (e.g., silica), metal oxides (e.g., boehmite, aluminum oxide, iron oxide, titanium oxide, manganese oxide, magnesium oxide, zirconium oxide, zinc oxide, molybdenum oxide, cobalt oxide, bismuth oxide, chromium oxide, tin oxide, antimony oxide, nickel oxide, copper oxide or tungsten oxide), metal powders (e.g., aluminum, iron, titanium, manganese, zinc, molybdenum, cobalt, bismuth, chromium, tin, antimony, nickel, copper, or tungsten), or metal salts (e.g., zinc borate, zinc metaborate, barium metaborate, zinc carbonate, magnesium carbonate, calcium carbonate, or barium carbonate) as flame retardant synergists.

With the advance of technology, there also is a current and general desire that the polyamides used in electrical/electronic applications have high temperature resistance (i.e., thermal stability) since molded articles (such as circuit breaks) comprising the same may be put into long-term use at temperatures higher than 130°C, or even higher than 150°C. U.S. Patent No. 2,705,227 discloses the use of copper compounds (e.g., metallic copper, copper acetate, copper formate, copper carbonate, or cupric sulfite), phosphate esters, or combinations of copper compounds and inorganic halides as thermal stabilizers. European Patent Application No. EP 1498445 discloses organic thermal stabilizers such as phenolic antioxidants and aromatic amines and inorganic thermal stabilizers such as finely dispersed elementary copper or iron. PCT Patent Application No. WO2006/08462 discloses the use of copper-containing compounds and/or hindered phenols as thermal stabilizers. More recently, U.S. Patent Publication Nos. 2010/0029820; 2010/0029821; and 2010/0028580 disclose the use of polyhydric alcohols as thermal stabilizers in polyamide compositions to improve the long-term thermal stability of molded or extruded articles made therefrom. US2005/119379A1 also relates to flame retardant polyamide compositions. EP1041109A2 and WO2010/014785A1 disclose the use of polyhydric alcohols in polyamide compositions.

However, the compatibility between the various thermal stabilizers and the various halogen-free flame retardant systems described above and the combined use thereof in polyamide compositions have not yet been studied in the prior art. There is still a current need to develop an additive system useful in polyamide compositions to improve the flame retardance and thermal stability thereof.

### Summary

The purpose of the present disclosure is to provide a flame retardant polyamide composition, which has good thermal stability and processability.

Provided herein is a flame retardant polyamide composition of claim 1.

In one embodiment of the flame retardant polyamide composition, the at least one polyamide is selected from aromatic polyamides. Or, the at least one polyamide may be selected from the group consisting of polyamide MXD,6; polyamide 12,T; polyamide 11,T; polyamide 10,T; polyamide 9,T; polyamide 6,T; polyamide 6,T/6,6; polyamide 6,6/6,T; polyamide 6,T/6,I; polyamide 6,T/D,T; polyamide 6,6/6,T/6,I; polyamide 6/6,T; polyamide 6,I/6,T; polyamide 6,I; polyamide MXD,I/6,I; polyamide MXD,I/MXD,T/6,I/6,T; polyamide MXD,I/12,I; polyamide MXD,I; polyamide MACM,I/12; polyamide MACM,I/MACM,T/12; polyamide 6,I/MACM,I/12; polyamide 6,I/6,T/MACM,I/MACM,T; polyamide 6,I/6,T/MACM,I/MACM,T/12; polyamide MACM,I/MACM,12; and mixtures of two or more thereof.

In a further embodiment of the flame retardant polyamide composition, the at least one polyamide is selected from aliphatic polyamides. Or, the at least one polyamide may be selected from the group consisting of polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; and mixtures of two or more thereof.

In a yet further embodiment of the flame retardant polyamide composition, the at least one polyamide is selected from the group consisting of polyamide 6,6; polyamide 6,6/6,T; polyamide 6,T/6,6; polyamide 6,I/6,T; polyamide 6, T/6,I; and mixtures of two or more thereof. Or, the at least one polyamide may also be polyamide 6,6/6,T.

In a yet further embodiment of the flame retardant polyamide composition, the at least one halogen-free flame retardant comprises at least one selected from the group consisting of phosphinates of the formula (I), disphosphinates of the formula (II), and combinations or polymers thereof 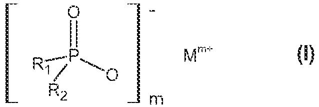 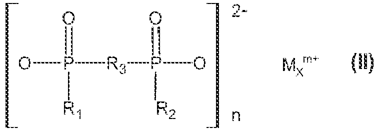 wherein R₁ and R₂ are identical or different and each of R₁ and R₂ is an hydrogen or a linear or branched C₁-C₆ alkyl group or an aryl; R₃ is a linear or branched C₁-C₁₀ alkylene group, a C₆-C₁₀ arylene group, an alkyl-arylene group, or an aryl-alkylene group; M is selected from the group consisting of calcium ions, magnesium ions, aluminum ions, zinc ions, titanium ions, and combinations of two or more thereof; m is an integer of 2 or 3; n is an integer of 1 or 3; and x is an integer of 1 or 2.

In a yet further embodiment of the flame retardant polyamide composition, the at least one polyhydric alcohol is selected from the group consisting of tripentaerythritol, dipentaerythritol, pentaerythritol, and combinations of two or more thereof. Or, the at least one polyhydric alcohol is dipentaerythritol.

In a yet further embodiment of the flame retardant polyamide composition, the at least one reinforcing agent is selected from the group consisting of glass fibers, carbon fibers, whiskers of wollastonite, whiskers of potassium titanates, montmorillonites, talc, mica, calcium carbonates, silica, clays, kaolins, glass powders, glass beads, polymeric powders, and mixtures of two or more thereof. Or, the at least one reinforcing agent is selected from glass fibers.

In a yet further embodiment of the flame retardant polyamide composition, based on the total weight of the flame retardant polyamide composition, the content levels of the at least one polyamide, the at least one halogen-free flame retardant, the beohmite, the at least one polyhydric alcohol, and the at least one reinforcing agent are:
(h) about 29-77.5 wt%, about 8-17 wt%, about 4-8 wt%, about 0.5-6 wt%, and about 10-40 wt%, respectively; or
(i) about 29-77 wt%, about 8-17 wt%, about 4-8 wt%, about 1-6 wt%, and about 10-40 wt%, respectively; or
(j) about 29.5-76 wt%, about 8-17 wt%, about 4-8 wt%, about 2-5.5 wt%, and about 10-40 wt%, respectively;

In a yet further embodiment of the flame retardant polyamide composition, the composition has a tensile strength retention rate of about 70% or more, or about 70%-90%, or about 75%-90% after 500-hour aging, as determined in accordance to ISO 527-2/1A.

Further provided herein is an article comprising the flame retardant polyamide composition described above.

In one embodiment of the article, it is a molded article.

In a further embodiment of the article, it is selected from the group consisting of circuit breakers, connectors, coil formers, junction boxes, inverters, switches, relays, lamp sockets, motors, and printers.

### Detailed Description

Disclosed herein is a flame retardant and thermally stable polyamide composition comprising, based on the total weight of the flame retardant polyamide composition, (a) 29-77.75 wt% of at least one polyamide; (b) 8-17 wt% of at least one halogen-free flame retardant selected from phosphorus compounds;(c) 4-8 wt% of boehmite; (d) 0.25-6 wt% of at least one polyhydric alcohol having more than two hydroxyl groups and a number average molecular weight (Mn) of 2000 or less; and(e) 10-40 wt% of at least one reinforcing agent.

The polyamides used herein may be (a) condensation products of one or more dicarboxylic acids and one or more diamines, or (b) condensation products of one or more aminocarboxylic acids, or (c) ring opening polymerization products of one or more cyclic lactams. Suitable polyamides used in the polyamide composition disclosed herein include aliphatic polyamides and semi-aromatic polyamides.

The term "aliphatic polyamide" refers to a polyamide containing no aromatic ring in its molecular chain. The aliphatic polyamides may be formed from aliphatic and alicyclic monomers such as diamines, dicarboxylic acids, lactams, aminocarboxylic acids, and their reactive equivalents.

The diamine used here may be aliphatic or alicyclic diamines, including but not limited to, tetramethylenediamine; hexamethylenediamine; 2 methylpentamethylenediamine; nonamethylenediamine; undecamethylenediamine; dodeca-methylenediamine; 2,2,4-trimethylhexamethylenediamine; 2,4,4 trimethylhexamethylenediamine; 5-methylnonamethylene-diamine; 1,3 bis(aminomethyl)cyclohexane; 1,4-bis(aminomethyl)cyclohexane; 1-amino-3 aminomethyl-3,5,5-trimethylcyclohexane; bis(4-aminocyclohexyl)methane; bis(3-methyl-4-aminocyclohexyl)methane; 2,2-bis(4-aminocyclohexyl)propane; bis(aminopropyl)piperazine; aminoethylpiperazine; bis(p-aminocyclohexyl)methane; 2 methyloctamethylenediamine; trimethylhexamethylenediamine; 1,8-diaminooctane; 1,9 diaminononane; 1,10-diaminodecane; 1,12-diaminododecane; m-xylylenediamine; and the like.

The dicarboxylic acid used here may be aliphatic or alicyclic dicarboxylic acids, including but not limited to, adipic acid; glutaric acid; pimelic acid; suberic acid; azelaic acid; sebacic acid; dodecanedioic acid; 1,4 cyclohexanedicarboxylic acid; and the like.

The aminocarboxylic acids used here may be aminocarboxylic acids having 6 to 12 carbon atoms, including but not limited to, 6-aminocapronic acid; 7-aminoheptanoic acid; 9-aminononanoic acid; 11-aminoundecanoic acid; 12-aminododecanoic acid; and the like.

The lactam used here may be lactams having 4 to 12 carbon atoms, including but not limited to, α-pyrrolidone; ε-caprolactam; ω-laurolactam; ε-enantholactam; and the like.

Exemplary aliphatic polyamides used here include, but are not limited to, polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; and polyamide 6,13.

The term "semi-aromatic polyamide" refers to a polyamide that is a homopolymer, copolymer, terpolymer, or higher polymer containing at least one aromatic monomer component. For example, a semi-aromatic polyamide may be obtained by using an aliphatic dicarboxylic acid and an aromatic diamine, or an aromatic dicarboxylic acid and an aliphatic diamine as starting materials and subjecting them to polycondensation. The aliphatic diamine and aliphatic dicarboxylic acid used in the above mentioned aliphatic polyamide may be used herein. Suitable aromatic diamines may include, but are not limited to, m-xylylenediamine, p-xylylenediamine, and the like. Suitable aromatic dicarboxylic acids may include, but are not limited to, naphthalenedicarboxylic acid, terephthalic acid, isophthalic acid, phthalic acid, and the like.

Exemplary semi-aromatic polyamides include, but are not limited to, poly(m-xylylene adipamide) (polyamide MXD,6); poly(dodecamethylene terephthalamide) (polyamide 12,T); poly(hendecamethylene terephthalamide) (polyamide 11,T); poly(decamethylene terephthalamide) (polyamide 10,T); poly(nonamethylene terephthalamide) (polyamide 9,T); poly(hexamethylene terephthalamide) (polyamide 6,T); hexamethylene adipamide/hexamethylene terephthalamide copolyamide (polyamide 6,T/6,6, i.e., polyamide 6,T/6,6 having at least about 50 mol% of its repeating units derived from 6,T); hexamethylene terephthalamide/hexamethylene adipamide copolyamide (polyamide 6,6/6,T, i.e., polyamide 6,6/6,T having at least about 50 mol% of its repeating units derived from 6,6); poly(hexamethylene terephthalamide/hexamethylene isophthalamide) (polyamide 6,T/6,I, i.e., polyamide 6,T/6,I having at least about 50 mol% of its repeating units derived from 6,T); hexamethylene terephthalamide/2-methylpentamethylene terephthalamide copolyamide (polyamide 6,T/D,T); hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T); poly(hexamethylene isophthalamide/hexamethylene terephthalamide) (polyamide 6,I/6,T, i.e., polyamide 6,I/6,T having at least about 50 mol% of its repeating units derived from 6,I); poly(hexamethylene isophthalamide) (polyamide 6,I); poly(metaxylylene isophthalamide/ hexamethylene isophthalamide) (polyamide MXD,I/6,I); poly(metaxylylene isophthalamide/ metaxylylene terephthalamide/ hexamethylene isophthalamide) (polyamide MXD,I/MXD,T/6,I/6,T); poly(metaxylylene isophthalamide/dodecamethylene isophthalamide) (polyamide MXD,I/12,I); poly(metaxylylene isophthalamide) (polyamide MXD,I); poly(dimethyldiaminodicyclohexylmethane isophthalamide/dodecanamide) (polyamide MACM,I/12); poly(dimethyldiaminodicyclohexylmethane isophthalamide/dimethyldiaminodicyclohexylmethane terephthalamide/dodecanamide) (polyamide MACM,I/MACM,T/12); poly(hexamethylene isophthalamide/dimethyldiaminodicyclohexylmethane isophthalamide/dodecanamide) (polyamide 6,I/MACM,I/12); poly(hexamethylene isophthalamide/hexamethylene terephthalamide/ dimethyldiaminodicyclohexylmethane isophthalamid/ dimethyldiaminodicyclohexylmethane terephthalamide) (polyamide 6,I/6,T/MACM,I/MACM,T); poly(hexamethylene isophthalamide/hexamethylene terephthalamide/dimethyldiaminodicyclohexylmethane isophthalamid/ dimethyldiaminodicyclohexylmethane terephthalamide/dodecanamide) (polyamide 6,I/6,T/MACM,I/MACM,T/12); poly(dimethyldiaminodicyclohexylmethane isophthalamide/ dimethyldiaminodicyclohexylmethane dodecanamide) (polyamide MACM,I/MACM,12); and the like.

In accordance, the at least one polyamide comprised in the polyamide composition disclosed herein may be selected from aliphatic polyamides, semi-aromatic polyamides, and mixtures thereof.

In one embodiment, the at least one polyamide comprised in the polyamide composition disclosed herein may be selected from aliphatic polyamides, such as those disclosed above. Or, the at least one polyamide comprised in the polyamide composition disclosed herein may be polyamide 6,6.

In a further embodiment, the at least one polyamide comprised in the polyamide composition disclosed herein may be selected from semi-aromatic polyamides, such as those disclosed above. Or the at least one polyamide comprised in the polyamide composition disclosed herein may be polyamide 6,6/6,T; polyamide 6,T/6,6; polyamide 6,I/6,T; polyamide 6,T/6,I; or a mixture of two or more thereof. The at least one polyamide comprised in the polyamide composition disclosed herein may be polyamide 6,6/6,T, and preferably wherein the 6,T repeat unit is present at 10 to about 30 mole %; and more preferably at about 20 to 30 mole %.

In a yet further embodiment, the at least one polyamide comprised in the polyamide composition disclosed herein may be a blend of at least one aliphatic polyamide selected from those described above and at least one semi-aromatic polyamide selected from those described above. Or the at least one polyamide comprised in the polyamide composition disclosed herein may be a blend of polyamide 6,6/6,T and polyamide 6,I/6,T.

The at least one polyamide may be comprised in the polyamide composition at a level of 29-77.75 wt%, based on the total weight of the polyamide composition.

The at least one halogen-free flame retardant used in the polyamide composition disclosed herein may be a phosphorus compound selected from phosphinates of the formula (I), disphosphinates of the formula (II), and combinations or polymers thereof 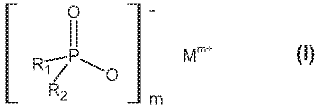 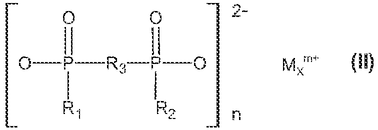 wherein R₁ and R₂ may be identical or different and each of R₁ and R₂ is a hydrogen or a linear or branched C₁-C₆ alkyl group or an aryl group; R₃ is a linear or branched C₁-C₁₀ alkylene group, a C₆-C₁₀ arylene group, an alkyl-arylene group, or an aryl-alkylene group; M is selected from calcium ions, magnesium ions, aluminum ions, zinc ions, titanium ions, and combinations thereof; m is an integer of 2 or 3; n is an integer of 1 or 3; and x is an integer of 1 or 2. Preferably, R₁ and R₂ may be independently selected from methyl, ethyl, n-propyl, isopropyl, n-butyl, tert-butyl, n-pentyl, and phenyl; R₃ may be selected from methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene, and phenylbutylene; and M may be selected from aluminum and zinc ions. More preferably, the phosphinates used here may be selected from aluminum methylethylphosphinate, aluminum diethylphosphinate, and combinations thereof.

The at least one halogen-free flame retardant is comprised in the polyamide composition disclosed herein at a level of 8-17 wt%, based on the total weight of the polyamide composition.

In accordance to the present disclosure, the boehmite is comprised in the polyamide composition disclosed at a level of 4-8 wt%, based on the total weight of the polyamide composition.

The at least one polyhydric alcohol comprised in the polyamide composition disclosed herein may have a number average molecular weight (Mn) of about 2000 or less, as determined with gel permeation chromatography (GPC), and may be selected from aliphatic hydroxylic compounds containing more than two hydroxyl groups, aliphatic-cycloaliphatic compounds containing more than two hydroxyl groups, cycloaliphatic compounds containing more than two hydroxyl groups, and saccharides.

An aliphatic chain in the polyhydric alcohol can include not only carbon atoms but also one or more hetero atoms which may be selected, for example, from nitrogen, oxygen and sulphur atoms. A cycloaliphatic ring present in the polyhydric alcohol can be monocyclic or part of a bicyclic or polycyclic ring system and may be carbocyclic or heterocyclic. A heterocyclic ring present in the polyhydric alcohol can be monocyclic or part of a bicyclic or polycyclic ring system and may include one or more hetero atoms which may be selected, for example, from nitrogen, oxygen and sulphur atoms. The at least one polyhydric alcohol used herein may contain one or more substituents, such as ether, carboxylic acid, carboxylic acid amide or carboxylic acid ester groups.

Exemplary polyhydric alcohols used herein may include, without limitation, triols (e.g., glycerol; trimethylolpropane; 2,3-di-(2'-hydroxyethyl)-cyclohexan-1-ol; hexane-1,2,6-triol; 1,1,1-tris-(hydroxymethyl)ethane; 3-(2'-hydroxyethoxy)-propane-1,2-diol; 3-(2'-hydroxypropoxy)-propane-1,2-diol; 2-(2'-hydroxyethoxy)-hexane-1,2-diol; 6-(2'-hydroxypropoxy)-hexane-1,2-diol; 1,1,1-tris-[(2'-hydroxyethoxy)-methyl]-ethane; 1,1,1-tris-[(2'-hydroxypropoxy)-methyl]-propane; 1,1,1-tris-(4'-hydroxyphenyl)-ethane; 1,1,1-tris-(hydroxyphenyl)-propane; 1,1,3-tris-(dihydroxy-3-methylphenyl)-propane; 1,1,4-tris-(dihydroxyphenyl)-butane; 1,1,5-tris-(hydroxyphenyl)-3-methylpentane; di-trimethylopropane; trimethylolpropane ethoxylates; or trimethylolpropane propoxylates); polyols (e.g., pentaerythritol; dipentaerythritol; or tripentaerythritol); and saccharides (e.g., cyclodextrin; D-mannose; glucose; galactose; sucrose; fructose; xylose; arabinose; D-mannitol; D-sorbitol; D-or L-arabitol; xylitol; iditol; talitol; allitol; altritol; erythritol; threitol; or D-gulonic-y-lactone); and the like.

In one embodiment, suitable polyhydric alcohols used herein may include those having at least one pair of hydroxyl groups which are attached to respective carbon atoms which are separated one from another by at least one atom.

In a further embodiment, suitable polyhydric alcohols used herein may include those in which at least one pair of hydroxyl groups is attached to respective carbon atoms which are separated one from another by a single carbon atom.

In a yet further embodiment, suitable polyhydric alcohols used herein may be selected from pentaerythritol, dipentaerythritol, tripentaerythritol, ditrimethylolpropane, D-mannitol, D-sorbitol, xylitol, and combinations of two or more thereof.

In a yet further embodiment, the polyhydric alcohol used herein is dipentaerythritol and/or tripentaerythritol.

In a yet further embodiment, the polyhydric alcohol used herein is dipentaerythritol.

In accordance to the present disclosure, the at least one polyhydric alcohol is comprised in the polyamide composition disclosed herein at a level of about 0.25-6 wt %, or about 0.5-6 wt %, or about 1-6 wt%, or about 2-5.5 wt%, based on the total weight of the polyamide composition.

Based on the total weight of the polyamide composition disclosed herein, the at least one reinforcing agent is comprised in the polyamide composition at a level of 10-40 wt%. Suitable reinforcing agents may be selected from, without limitation, fibrous inorganic materials (such as glass fibers, carbon fibers, and whiskers of wollastonite and potassium titanate), inorganic fillers (such as various montmorillonite, talc, mica, calcium carbonate, silica, clay, kaolin, glass powder, and glass beads), organic fillers (such as various organic or polymeric powders), and mixtures of two or more thereof. In one embodiment, the at least one reinforcing agent comprised in the polyamide composition disclosed herein is selected from glass fibers.

In accordance to the present disclosure, based on the total weight of the polyamide composition disclosed herein, the at least one polyamide, the at least one halogen-free flame retardant, the boehmite, the at least one polyhydric alcohol, and the at least one reinforcing agent may be present at levels of:
- about 29-77.75 wt%, about 8-17 wt%, about 4-8 wt%, about 0.25-6 wt%, and about 10-40 wt%, respectively; or
- about 29-77.5 wt%, about 8-17 wt%, about 4-8 wt%, about 0.5-6 wt%, and about 10-40 wt%, respectively; or
- about 29-77 wt%, about 8-17 wt%, about 4-8 wt%, about 1-6 wt%, and about 10-40 wt%, respectively; or
- about 29.5-76 wt%, about 8-17 wt%, about 4-8 wt%, about 2-5.5 wt%, and about 10-40 wt%, respectively; or
- about 29-77.75 wt%, about 8-17 wt%, about 4-8 wt%, about 0.25-6 wt%, and about 10-40 wt%, respectively.

The polyamide composition disclosed herein may optionally further comprise other additional additives such as anticorrosion aids (e.g., zinc borate), impact modifiers, ultraviolet light stabilizers, heat stabilizers, antioxidants, processing aids, lubricants, colorants (including dyes, pigments, carbon black, and the like), and combinations of two or more thereof.

The polyamide composition disclosed herein may be prepared by melt-blending the components using any known methods. The component materials may be mixed to uniformity using a melt-mixer such as a single or twin-screw extruder, blender, kneader, Banbury mixer, etc. to give the polyamide composition. Or, part of the materials may be mixed in a melt-mixer, and the rest of the materials may then be added and further melt-mixed until uniform.

As it is discussed in the background section, although various thermal stabilizers and various halogen-free flame retardant systems have been disclosed in the prior art, the compatibility between the various thermal stabilizers and the various halogen-free flame retardant systems and the combined use thereof in polyamide compositions have not yet been studied. Based on Applicant's work (see the Examples section below), it is demonstrated that only certain thermal stabilizers (i.e., polyhydric alcohol) and certain halogen-free flame retardant systems (i.e., phosphorus compounds in combination with boehmite) can be combined and useful in polyamide compositions.

In particular, the examples below demonstrate that when polyhydric alcohol is incorporated in polyamide compositions comprising phosphorus compound based flame retardants and melamine polyphosphate (MPP) based flame retardant synergists, the processability of the composition drops dramatically. However, the examples below also demonstrate that when polyhydric alcohol is incorporated in polyamide compositions comprising the phosphorus compound based flame retardants and boehmite based flame retardant synergists, the processability of the composition remains acceptable. Moreover, the examples below also demonstrates that at the presence of MPP, the addition of polyhydric alcohol raises the post aging tensile strength retention rate of the polyamide composition from 44% to 65% (an about 48% improvement), while when MPP is replaced by boehmite, the addition of polyhydric alcohol raises the post aging tensile strength retention rate of the polyamide composition from 45-48% to 77-83% (an about 60% or more improvement).

In accordance, the polyamide composition disclosed herein may have a tensile strength retention rate of about 70% or more, or about 70%-90%, or about 75%-90% after 500-hour aging. The tensile strength used herein is determined in accordance to ISO 527-2/1A and the 500-hour aging involves conditioning the testing samples in air ovens that were set at 210°C for 500 hours.

The polyamide compositions disclosed herein may be formed into articles using any known melt-processing means such as injection molding, blow molding, extrusion, or thermoforming.

Accordingly, further disclosed herein are molded articles formed by the polyamide composition described above. In one embodiment, the molded articles may be used in various electrical/electronic applications. For example, the molded articles may be selected from circuit breakers, connectors, coil formers, junction boxes, inverters, switches, relays, lamp sockets, motors, printers, and the like. In addition, the molded articles may also be vehicular components, such as, charge air coolers (CAC); cylinder head covers (CHC); oil pans; engine cooling systems (including thermostat and heater housings and coolant pumps); exhaust systems (including mufflers and housings for catalytic converters); air intake manifolds (AIM); and timing chain belt front covers.

### Examples

### Material:

- PA66/6T: a semi-aromatic polyamide that has a 1,6-hexanedioic acid and terephthalic acid molar ratio of 75:25 and was made as follows: a 51.7 wt% polyamide 66 salt solution with a pH of 8.1 (3928 lb) and a 25.2 wt% polyamide 6T salt solution with a pH of 7.6 (2926 lb) were charged into an autoclave along with 100 g of a conventional antifoam agent, 20 g of sodium hypophosphite, 220 g of sodium bicarbonate, 2476 g of 80% hexamethylene diamine (HMD) solution in water, and 1584 g of glacial acetic. The solution was then heated while the pressure was allowed to rise to 18 atm at which point, steam was vented to maintain the pressure at 18 atm and heating was continued until the temperature of the batch reached 250°C. The pressure was then reduced slowly to 0.4 atm, while the batch temperature was allowed to further rise to 280-290°C. The pressure was then held at 0.4 atm and the temperature was held at 280-290°C for 20 minutes. Finally, the polymer melt was extruded into strands, cooled, and cut into pellets;
- PA6I/6T: an amorphous semi-aromatic polyamide obtained from E.I. du Pont de Nemours and Company, U.S.A. (hereafter "DuPont"), under the trade name of Zytel® HTN503NC010;
- FR: an aluminum diethylphosphinate based flame retardant obtained from Clariant International Ltd., Switzerland, under the trade name of Exolit™ OP1230;
- MPP: a melamine polyphosphate (MPP) based flame retardant synergist obtained from BASF, Germany, under the trade name of Melapur™ 200/70;
- BMT: boehmite based flame regardant synergist obtained from Kawai Sekkai Kogyo K.K., Japan, under the trade name of Celasule™ BMT-33;
- ZB: zinc borate obtained from US Borax, U.S.A., under the trade name of Firebrake™ ZB;
- GF: glass fiber obtained from PPG Industries, Inc, U.S.A., under the trade name of Glass PPG3660;
- AO: antioxidant obtained from BASF, Germany, under the trade name of Irganox™ 1098;
- Polyhydric Alcohol: dipentaerythritol obtained from Perstorp AB, Sweden., under the trade name of D-Penta 93;
- Lubricant: obtained from Croda International, England, under the trade name of Crodamide™212.

### Comparative Examples CE1-CE6 and Examples E1 and E2:

In each of the examples, a polyamide composition (various components for each composition are listed in Table 1) was melt blended in a 26 mm twin screw extruder (Coperion ZSK26 from Coperion GmbH, Germany) with the temperature set at about 280°C, speed about 300 rpm, and throughput about 20 kg/hr. During extrusion, GF were fed through a first side feeder at zone 5, FR, ZB, and flame retardant synergists (e.g., MPP or BMT) were fed through a second side feeder at zone 8, while all the other components were fed through the main feeder. The compounded mixtures were then extruded out in the form of strands, cooled in water baths, chopped into pellets, dried at 70°C dehumidifying ovens, and then sealed in aluminum lined bags.

Following UL-94 flammability rating procedures, the resin pellets obtained above were injection molded into 0.8 mm thick test bars and conditioned at (i) 23°C, 50% relative humidity (RH) for 48 hours or (i) 70°C air oven for 168 hours before testing. The UL-94 flammability rating for each composition at these conditions were obtained and tabulated in Table 1. The results demonstrate that the addition of Polyhydric Alcohol (i.e., dipentaerythritol) does not affect the flame retardancy of the composition as long as MPP or BMT is also present as a flame retardant synergist.

Further, the melt viscosity (MV) at shear rate of 1000 S⁻¹ for the resin pellets were measured in accordance to ISO11443. Two measurements were obtained for the composition in each of the examples, one is with a hold up time of 5 min in a hot capillary rheometer barrel set at 280°C and the other with a hold up time of 15 min. The MV retention rate of the composition in each example was also calculated and tabulated in Table 1. The results demonstrate that without Polyhydric Alcohol, the MV retention rate for compositions having MPP was about 69-70% (CE5 and CE6), while for compositions having BMT, the MV retention rate was about 92-96% (CE3 and CE4). However, with the addition of Polyhydric Alcohol, the MV retention rate for compositions having MPP was decreased to about 21-34% (CE1 and CE2), an about 51-70% reduction, while for compositions with BMT, the MV retention rate was decreased to about 69-76% (E1 and E2), an about 21-25% reduction. Such low MV retention rate of the compositions having the combination of Polyhydric Alcohol with MPP indicates that when MPP is used as the flame retardant synergist, the addition of Polyhydric Alcohol lowers the processability of the polyamide compositions to an unacceptable degree.

The tensile strength at break and elongation at break of the composition in each example were determined in accordance to ISO 527-2/1A. Briefly, the resin pellets obtained above were injection molded into ISO tensile bars (4x10x170 mm) using a Sumitomo100T injection molding machine (purchased from Sumitomo Heavy Industries Ltd., Japan) that was set at a melt temperature of about 290-300°C and mold temperature of about 100°C. The tensile strength at break and elongation at break of the as-molded tensile bars were then tested at a testing speed of about 5 mm/min and tabulated in Table 1. Further, the tensile bars were aged in air ovens that were set at 210°C for 500 hours and the tensile strength at break and elongation at break of the aged tensile bars were also tested and tabulated in Table 1. In addition, the tensile strength retention rate for the composition in each example was calculated and tabulated in Table 1. The results demonstrate that without Polyhydric Alcohol, the tensile strength retention rate for compositions containing MPP was about 44% (CE5 and CE6), while for compositions containing BMT, the tensile strength retention rate was about 45-48% (CE3 and CE4). However, with the addition of Polyhydric Alcohol, the tensile strength retention rate for compositions containing MPP was about 65% (CE1 and CE2), an about 48% increase from that of CE5 and CE6, while for compositions containing BMT, the tensile strength retention rate was about 77-83% (E1 and E2), an about 60-84% increase from that of CE3 and CE4.

**TABLE 1**

| | E1 | E2 | CE1 | CE2 | CE3 | CE4 | CE5 | CE6 |
|---|---|---|---|---|---|---|---|---|
| PA66/6T (wt%) | 50 | 44 | 50 | 44 | 52.5 | 46.5 | 52.5 | 46.5 |
| PA6I/6T (wt%) | | 6 | | 6 | | 6 | | 6 |
| FR (wt%) | 14 | 14 | 14 | 14 | 14 | 14 | 14 | 14 |
| MPP (wt%) | | | 7 | 7 | | | 7 | 7 |
| GF (wt%) | 25 | 25 | 25 | 25 | 25 | 25 | 25 | 25 |
| AO (wt%) | 0.3 | 0.3 | 0.3 | 0.3 | 0.3 | 0.3 | 0.3 | 0.3 |
| Polyhydric Alcohol (wt%) | 2.5 | 2.5 | 2.5 | 2.5 | | | | |
| Zinc Borate (wt%) | 1 | 1 | 1 | 1 | 1 | 1 | 1 | 1 |
| Boehmite (wt%) | 7 | 7 | | | 7 | 7 | | |
| Lubricant (wt%) | 0.2 | 0.2 | 0.2 | 0.2 | 0.2 | 0.2 | 0.2 | 0.2 |

| As molded | | | | | | | | |
|---|---|---|---|---|---|---|---|---|
| UL94 Flammability Rating (48 hr @ 23°C and 50% RH) | V0 | V0 | V0 | V0 | V0 | V0 | V0 | V0 |
| UL94 Flammability Rating (168 hr @ 70°C) | V0 | V0 | V0 | V0 | V0 | V0 | V0 | V0 |
| MV (5 min hold up time) (Pa.s) | 195 | 145 | 177 | 168 | 314 | 318 | 240 | 288 |
| MV (15 min hold up time) (Pa.s) | 134 | 110 | 38 | 57 | 289 | 304 | 166 | 202 |
| MV Retention Rate (%) | 69 | 76 | 21 | 34 | 92 | 96 | 69 | 70 |
| Tensile Strength at Break (MPa) | 118 | 121 | 144 | 150 | 120 | 123 | 135 | 140 |
| Elongation at Break (%) | 2.2 | 2.2 | 2.7 | 2.6 | 2.3 | 2.5 | 2.8 | 2.8 |

| Aged at 210°C for 500 hr (MPa) | | | | | | | | |
|---|---|---|---|---|---|---|---|---|
| Tensile Strength at Break (MPa) | 91 | 100 | 93 | 98 | 57 | 55 | 60 | 62 |
| Elongation at Break (%) | 1.2 | 1.5 | 1.2 | 1.5 | 0.7 | 0.7 | 0.8 | 0.7 |
| Tensile Strength Retention Rate (%) | 77 | 83 | 65 | 65 | 48 | 45 | 44 | 44 |

## Claims

1. A flame retardant polyamide composition comprising, based on the total weight of the flame retardant polyamide composition,
(a) 29-77.75 wt% of at least one polyamide;
(b) 8-17 wt% of at least one halogen-free flame retardant selected from phosphorus compounds;
(c) 4-8 wt% of boehmite;
(d) 0.25-6 wt% of at least one polyhydric alcohol having more than two hydroxyl groups and a number average molecular weight (Mn) of 2000 or less; and
(e) 10-40 wt% of at least one reinforcing agent.

2. The flame retardant polyamide composition of Claim 1, wherein, the at least one polyamide is selected from aromatic polyamides, or wherein, the at least one polyamide is selected from the group consisting of polyamide MXD,6; polyamide 12,T; polyamide 11,T; polyamide 10,T; polyamide 9,T; polyamide 6,T; polyamide 6,T/6,6; polyamide 6,6/6,T; polyamide 6,T/6,I; polyamide 6,T/D,T; polyamide 6,6/6,T/6,I; polyamide 6/6,T; polyamide 6,I/6,T; polyamide 6,I; polyamide MXD,I/6,I; polyamide MXD,I/MXD,T/6,I/6,T; polyamide MXD,I/12,I; polyamide MXD,I; polyamide MACM,I/12; polyamide MACM,I/MACM,T/12; polyamide 6,I/MACM,I/12; polyamide 6,I/6,T/MACM,I/MACM,T; polyamide 6,I/6,T/MACM,I/MACM,T/12; polyamide MACM,I/MACM,12; and mixtures of two or more thereof.

3. The flame retardant polyamide composition of any of Claim 1, wherein the at least one polyamide is selected from aliphatic polyamides, or wherein the at least one polyamide is selected from the group consisting of polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; and mixtures of two or more thereof.

4. The flame retardant polyamide composition of Claim 1, wherein the at least one polyamide is selected from the group consisting of polyamide 6,6; polyamide 6,6/6,T; polyamide 6,T/6,6; polyamide 6,I/6,T; polyamide 6,T/6,I; and mixtures of two or more thereof.

5. The flame retardant polyamide composition of Claim 4, wherein the at least one polyamide is polyamide 6,6/6,T.

6. The flame retardant polyamide composition of any of Claims 1-5, wherein the at least one halogen-free flame retardant comprises at least one selected from the group consisting of phosphinates of the formula (I), disphosphinates of the formula (II), and combinations or polymers thereof 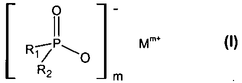 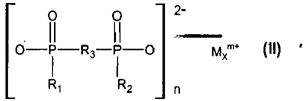 wherein R₁ and R₂ are identical or different and each of R₁ and R₂ is an hydrogen or a linear or branched C₁-C₆ alkyl group or an aryl; R₃ is a linear or branched C₁-C₁₀ alkylene group, a C₆-C₁₀ arylene group, an alkyl-arylene group, or an aryl-alkylene group; M is selected from the group consisting of calcium ions, magnesium ions, aluminum ions, zinc ions, titanium ions, and combinations of two or more thereof; m is an integer of 2 or 3; n is an integer of 1 or 3; and x is an integer of 1 or 2.

7. The flame retardant polyamide composition of any of Claims 1-6, wherein the at least one polyhydric alcohol is selected from the group consisting of tripentaerythritol, dipentaerythritol, pentaerythritol, and combinations of two or more thereof.

8. The flame retardant polyamide composition of any of Claims 1-7, wherein the at least one polyhydric alcohol is dipentaerythritol.

9. The flame retardant polyamide composition of any of Claims 1-8, wherein the at least one reinforcing agent is selected from the group consisting of glass fibers, carbon fibers, whiskers of wollastonite, whiskers of potassium titanates, montmorillonites, talc, mica, calcium carbonates, silica, clays, kaolins, glass powders, glass beads, polymeric powders, and mixtures of two or more thereof.

10. The flame retardant polyamide composition of any of Claims 1-8, wherein the at least one reinforcing agent is selected from glass fibers.

11. The flame retardant polyamide composition of any of Claims 1-10, wherein, based on the total weight of the flame retardant polyamide composition, the content levels of the at least one polyamide, the at least one halogen-free flame retardant, the beohmite, the at least one polyhydric alcohol, and the at least one reinforcing agent are:
(a) 29-77.5 wt%, 8-17 wt%, 4-8 wt%, 0.5-6 wt%, and 10-40 wt%, respectively; or
(b) 29-77 wt%, 8-17 wt%, 4-8 wt%, 1-6 wt%, and 10-40 wt%, respectively; or
(c) 29.5-76 wt%, 8-17 wt%, 4-8 wt%, 2-5.5 wt%, and 10-40 wt%, respectively.

12. The flame retardant polyamide composition of any of Claims 1-11, which has a tensile strength retention rate of 70% or more, or 70%-90%, or 75%-90% after 500-hour aging, as determined in accordance to ISO 527-2/1A.

13. An article comprising the flame retardant polyamide composition of any of Claims 1-12.

14. The article of Claim 13, which is a molded article.

15. The article of Claim 13, which is selected from the group consisting of circuit breakers, connectors, coil formers, junction boxes, inverters, switches, relays, lamp sockets, motors, and printers.

## Patentansprüche

1. Flammenhemmende Polyamidzusammensetzung, welche, basierend auf dem Gesamtgewicht der flammenhemmenden Polyamidzusammensetzung, Folgendes beinhaltet:
(a) 29 bis 77,75 Gewichtsprozent mindestens eines Polyamids;
(b) 8 bis 17 Gewichtsprozent mindestens eines halogenfreien flammenhemmenden Stoffs, ausgewählt aus Phosphorverbindungen;
(c) 4 bis 8 Gewichtsprozent Böhmit;
(d) 0,25 bis 6 Gewichtsprozent mindestens eines mehrwertigen Alkohols, welcher mehr als zwei Hydroxylgruppen und ein zahlenmittleres Molekulargewicht (Mn) von 2000 oder darunter besitzt; und
(e) 10 bis 40 Gewichtsprozent mindestens eines Verstärkungsmittels.

2. Flammenhemmende Polyamidzusammensetzung nach Anspruch 1, bei welcher das mindestens eine Polyamid aus aromatischen Polyamiden ausgewählt ist, oder bei welcher das mindestens eine Polyamid aus der Gruppe ausgewählt ist, bestehend aus Polyamid MXD,6; Polyamid 12,T; Polyamid 11,T; Polyamid 10,T; Polyamid 9,T; Polyamid 6,T; Polyamid 6,T/6,6; Polyamid 6,6/6,T; Polyamid 6,T/6,I; Polyamid 6,T/D,T; Polyamid 6,6/6,T/6,1; Polyamid 6/6,T; Polyamid 6,I/6,1; Polyamid 6,1; Polyamid MXD,I/6,1; Polyamid MXD,I/MXD,T/6,1/6,T; Polyamid MXD,I/12,1; Polyamid MXD,I; Polyamid MACM,I/12; Polyamid MACM,I/MACM,T/12; Polyamid 6,1/MACM,I/12; Polyamid 6,1/6,T/MACM,I/MACM,T; Polyamid 6,1/6,T/MACM,I/MACM,T/12; Polyamid MACM,I/MACM,12; und Mischungen aus zwei oder mehr Elementen hiervon.

3. Flammenhemmende Polyamidzusammensetzung nach Anspruch 1, bei welcher das mindestens eine Polyamid aus aliphatischen Polyamiden ausgewählt ist, oder bei welcher das mindestens eine Polyamid aus der Gruppe ausgewählt ist, bestehend aus Polyamid 6; Polyamid 6,6; Polyamid 4,6; Polyamid 6,10; Polyamid 6,12; Polyamid 11; Polyamid 12; Polyamid 9,10; Polyamid 9,12; Polyamid 9,13; Polyamid 9,14; Polyamid 9,15; Polyamid 6,16; Polyamid 9,36; Polyamid 10,10; Polyamid 10,12; Polyamid 10,13; Polyamid 10,14; Polyamid 12,10; Polyamid 12,12; Polyamid 12,13; Polyamid 12,14; Polyamid 6,14; Polyamid 6,13; Polyamid 6,15; Polyamid 6,16; Polyamid 6,13; und Mischungen aus zwei oder mehr Elementen hiervon.

4. Flammenhemmende Polyamidzusammensetzung nach Anspruch 1, bei welcher das mindestens eine Polyamid aus der Gruppe ausgewählt ist, bestehend aus Polyamid 6,6; Polyamid 6,6/6,T; Polyamid 6,T/6,6; Polyamid 6,I/6,T; Polyamid 6,T/6,I; und Mischungen aus zwei oder mehr Elementen hiervon.

5. Flammenhemmende Polyamidzusammensetzung nach Anspruch 4, bei welcher das mindestens eine Polyamid Polyamid 6,6/6,T ist.

6. Flammenhemmende Polyamidzusammensetzung nach einem der Ansprüche 1 bis 5, bei welcher der mindestens eine halogenfreie flammenhemmende Stoff mindestens eines beinhaltet, ausgewählt aus der Gruppe, bestehend aus Phosphinaten nach Formel (I), Diphosphinaten nach Formel (II) und Kombinationen oder Polymeren hieraus, 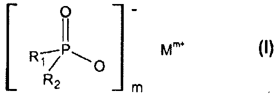 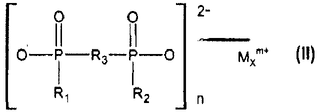 wobei R₁ und R₂ identisch oder unterschiedlich sind und ein jedes von R₁ und R₂ ein Wasserstoffatom oder eine lineare oder verzweigte C₁-C₆-Alkylgruppe oder ein Aryl ist; R₃ eine lineare oder verzweigte C₁-C₁₀-Alkylengruppe, eine C₆-C₁₀-Arylengruppe, eine Alkylarylengruppe oder eine Arylalkylengruppe ist; wobei M aus der Gruppe ausgewählt ist, bestehend aus Kalzium-Ionen, Magnesium-Ionen, Aluminium-Ionen, Zink-Ionen, Titan-Ionen und Kombinationen von zwei oder mehr Elementen hiervon; wobei m eine Ganzzahl von 2 oder 3 ist; wobei n eine Ganzzahl von 1 oder 3 ist; und wobei x eine Ganzzahl von 1 oder 2 ist.

7. Flammenhemmende Polyamidzusammensetzung nach einem der Ansprüche 1 bis 6, bei welcher der mindestens eine mehrwertige Alkohol aus der Gruppe ausgewählt ist, bestehend aus Tripentaerythritol, Dipentaerythritol, Pentaerythritol und Kombinationen aus zwei oder mehr Elementen hiervon.

8. Flammenhemmende Polyamidzusammensetzung nach einem der Ansprüche 1 bis 7, bei welcher der mindestens eine mehrwertige Alkohol Dipentaerythritol ist.

9. Flammenhemmende Polyamidzusammensetzung nach einem der Ansprüche 1 bis 8, bei welcher das mindestens eine Verstärkungsmittel aus der Gruppe ausgewählt ist, bestehend aus Glassfasern, Kohlenstofffasern, Borsten aus Wollastonit, Borsten aus Kaliumtitanaten, Montmorilloniten, Talkum, Glimmer, Kalziumkarbonaten, Silika, Tonerden, Kaolinen, Glaspulvern, Glasperlen, Polymerpulvern und Mischungen aus zwei oder mehr Elementen hiervon.

10. Flammenhemmende Polyamidzusammensetzung nach einem der Ansprüche 1 bis 8, bei welcher das mindestens eine Verstärkungsmittel aus Glasfasern ausgewählt ist.

11. Flammenhemmende Polyamidzusammensetzung nach einem der Ansprüche 1 bis 10, bei welcher, basierend auf dem Gesamtgewicht der flammenhemmenden Polyamidzusammensetzung, die Gehalte des mindestens einen Polyamids, des mindestens einen halogenfreien flammenhemmenden Stoffs, des Böhmits, des mindestens einen mehrwertigen Alkohols und des mindestens einen Verstärkungsmittel wie folgt lauten:
(a) jeweils 29 bis 77,5 Gewichtsprozent, 8 bis 17 Gewichtsprozent, 4 bis 8 Gewichtsprozent, 0,5 bis 6 Gewichtsprozent und 10 bis 40 Gewichtsprozent; oder
(b) jeweils 29 bis 77 Gewichtsprozent, 8 bis 17 Gewichtsprozent, 4 bis 8 Gewichtsprozent, 1 bis 6 Gewichtsprozent und 10 bis 40 Gewichtsprozent; oder
(c) jeweils 29,5 bis 76 Gewichtsprozent, 8 bis 17 Gewichtsprozent, 4 bis 8 Gewichtsprozent, 2 bis 5,5 Gewichtsprozent und 10 bis 40 Gewichtsprozent.

12. Flammenhemmende Polyamidzusammensetzung nach einem der Ansprüche 1 bis 11, welche eine Zugfestigkeits-Retentionsrate von 70 % oder darüber, oder von 70 % bis 90 %, oder von 75 % bis 90 % nach einer Alterung von 500 Stunden besitzt, bestimmt gemäß ISO 527-2/1A.

13. Artikel, welcher die flammenhemmende Polyamidzusammensetzung nach einem der Ansprüche 1 bis 12 beinhaltet.

14. Artikel nach Anspruch 13, welcher ein Formartikel ist.

15. Artikel nach Anspruch 13, welcher aus der Gruppe ausgewählt ist, bestehend aus Stromkreisunterbrechern, Steckverbindern, Spulenkörpern, Anschlussdosen, Umrichtern, Schaltern, Relais, Lampenfassungen, Motoren und Druckern.

## Revendications

1. Composition ignifuge de polyamide comprenant, sur la base du poids total de la composition ignifuge de polyamide,
(a) 29-77,75% en poids d'au moins un polyamide;
(b) 8-17% en poids d'au moins un ignifuge sans halogène choisi parmi des composés du phosphore;
(c) 4-8% en poids de boehmite;
(d) 0,25-6% en poids d'au moins un alcool polyhydrique possédant plus de deux groupes hydroxyles et un poids moléculaire moyen en nombre (Mn) de 2000 ou moins; et
(e) 10-40% en poids d'au moins un agent de renforcement.

2. Composition ignifuge de polyamide selon la revendication 1, dans laquelle le au moins un polyamide est choisi parmi des polyamides aromatiques ou dans laquelle le au moins un polyamide est choisi dans le groupe constitué de polyamide MXD,6; polyamide 12,T; polyamide 11,T; polyamide 10,T; polyamide 9,T; polyamide 6,T; polyamide 6,T/6,6; polyamide 6,6/6,T; polyamide 6,T/6,I; polyamide 6,T/D,T; polyamide 6,6/6,T/6,I; polyamide 6/6,T; polyamide 6,I/6,T; polyamide 6,I; polyamide MXD,I/6,I; polyamide MXD,I/MXD,T/6,I/6,T; polyamide MXD,I/12,I; polyamide MXD,I; polyamide MACM,I/12; polyamide MACM,I/MACM,T/12; polyamide 6,I/MACM,I/12; polyamide 6,I/6,T/MACM,I/MACM,T; polyamide 6,I/6,T/MACM,I/MACM,T/12; polyamide MACM,I/MACM,12; et de mélanges de deux ou plus de ceux-ci.

3. Composition ignifuge de polyamide selon la revendication 1, dans laquelle le au moins un polyamide est choisi parmi des polyamides aliphatiques ou dans laquelle le au moins un polyamide est choisi dans le groupe constitué de polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; et de mélanges de deux ou plus de ceux-ci.

4. Composition ignifuge de polyamide selon la revendication 1, dans laquelle le au moins un polyamide est choisi dans le groupe constitué de polyamide 6,6; polyamide 6,6/6,T; polyamide 6,T/6,6; polyamide 6,I/6,T; polyamide 6,T/6,I; et de mélanges de deux ou plus de ceux-ci.

5. Composition ignifuge de polyamide selon la revendication 4, dans laquelle le au moins un polyamide est le polyamide 6,6/6,T.

6. Composition ignifuge de polyamide selon l'une quelconque des revendications 1-5, dans laquelle le au moins un ignifuge sans halogène comprend au moins un choisi dans le groupe constitué de phosphinates de la formule (I), de diphosphinates de la formule (II) et de combinaisons de polymères de ceux-ci: 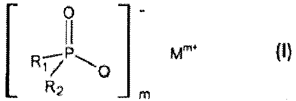 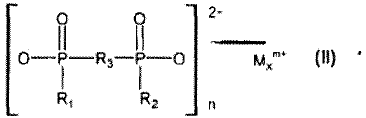 dans laquelle R₁ et R₂ sont identiques ou différents et chacun de R₁ et R₂ est un hydrogène ou un groupe C₁-C₆ alkyle linéaire ou ramifié ou un aryle; R₃ est un groupe C₁-C₁₀ alkylène linéaire ou ramifié, un groupe C₆-C₁₀ arylène, un groupe alkyl-arylène ou un groupe aryl-alkylène; M est choisi dans le groupe constitué d'ions calcium, d'ions magnésium, d'ions aluminium, d'ions zinc, d'ions titane et de combinaisons de deux ou plus de ceux-ci; m est un nombre entier de 2 ou 3; n est un nombre entier de 1 ou 3; et x est un nombre entier de 1 ou 2.

7. Composition ignifuge de polyamide selon l'une quelconque des revendications 1-6, dans laquelle le au moins un alcool polyhydrique est choisi dans le groupe constitué de tripentaérythritol, de dipentaérythritol, de pentaérythritol et de combinaisons de deux ou plus de ceux-ci.

8. Composition ignifuge de polyamide selon l'une quelconque des revendications 1-7, dans laquelle le au moins un alcool polyhydrique est le dipentaérythritol.

9. Composition ignifuge de polyamide selon l'une quelconque des revendications 1-8, dans laquelle le au moins un agent de renforcement est choisi dans le groupe constitué de fibres de verre, fibres de carbone, barbes de wollastonite, barbes de titanates de potassium, montmorillonites, talc, mica, carbonates de calcium, silice, argiles, kaolins, poudres de verre, billes de verre, poudres polymériques et de mélanges de deux ou plus de ceux-ci.

10. Composition ignifuge de polyamide selon l'une quelconque des revendications 1-8, dans laquelle le au moins un agent de renforcement est choisi parmi des fibres de verre.

11. Composition ignifuge de polyamide selon l'une quelconque des revendications 1-10, dans laquelle, sur la base du poids total de la composition ignifuge de polyamide, les niveaux de contenu du au moins un polyamide, du au moins un ignifuge sans halogène, de la boehmite, du au moins un alcool polyhydrique et du au moins un agent de renforcement sont:
(a) 29-77,5% en poids, 8-17% en poids, 4-8% en poids, 0,5-6% en poids et 10-40% en poids, respectivement; ou
(b) 29-77% en poids, 8-17% en poids, 4-8% en poids, 1-6% en poids et 10-40% en poids, respectivement; ou
(c) 29,5-76% en poids, 8-17% en poids, 4-8% en poids, 2-5,5% en poids et 10-40% en poids, respectivement.

12. Composition ignifuge de polyamide selon l'une quelconque des revendications 1-11, qui possède un taux de conservation de résistance à la traction de 70% ou plus, ou 70%-90%, ou 75%-90% après un vieillissement de 500 heures, tel que déterminé conformément à la norme ISO 527-2/1A.

13. Article comprenant la composition ignifuge de polyamide selon l'une quelconque des revendications 1-12.

14. Article selon la revendication 13, qui est un article moulé.

15. Article selon la revendication 13, qui est choisi dans le groupe constitué de coupe-circuits, connecteurs, bobinières, boîtes de connexion, inverseurs, commutateurs, relais, douilles de lampe, moteurs et imprimantes.
